# EUROPÄISCHE PATENTSCHRIFT

(11) **EP 3 353 025 B1**
(45) Veröffentlichungstag und Bekanntmachung des Hinweises auf die Patenterteilung: **05.02.2020**
(21) Anmeldenummer: 16747442.8
(22) Anmeldetag: 22.07.2016
(51) Int. Cl.: B60T 8/32, B60T 7/22, B60T 13/66

(54) **VERFAHREN ZUM EINSTELLEN VON BREMSDRÜCKEN EINES KRAFTFAHRZEUGS, BREMSANLAGE ZUR DURCHFÜHRUNG DES VERFAHRENS SOWIE KRAFTFAHRZEUG MIT EINER DERARTIGEN BREMSANLAGE**
METHOD FOR ADJUSTING BRAKE PRESSURES OF A MOTOR VEHICLE, BRAKE SYSTEM FOR CARRYING OUT THE METHOD AND MOTOR VEHICLE COMPRISING SUCH A BRAKE SYSTEM
PROCÉDÉ DE RÉGLAGE DES PRESSIONS DE FREINAGE D'UN VÉHICULE AUTOMOBILE, SYSTÈME DE FREINAGE POUR LA MISE EN OEUVRE DE CE PROCÉDÉ ET VÉHICULE À MOTEUR DOTÉ D'UN TEL SYSTÈME DE FREINAGE

(30) Priorität: 21.09.2015 DE 102015012378
(43) Veröffentlichungstag der Anmeldung: 01.08.2018
(73) Patentinhaber: WABCO GmbH, 30453 Hannover (DE)
(72) Erfinder: ECKERT, Horst, 31547 Rehburg-Loccum (DE)
(74) Vertreter: Rabe, Dirk-Heinrich
(86) Internationale Anmeldenummer: PCT/EP2016/001283
(87) Internationale Veröffentlichungsnummer: WO 2017/050407

(56) Entgegenhaltungen:
- WO-A1-98/13239
- WO-A1-99/06809
- DE-A1- 19 654 427
- DE-A1-102009 058 154

## Beschreibung

Die Erfindung betrifft ein Verfahren zum Einstellen von Bremsdrücken an den Radbremsen eines Kraftfahrzeugs gemäß dem Oberbegriff des Anspruchs 1. Außerdem betrifft die Erfindung eine Bremsanlage eines Kraftfahrzeugs gemäß dem Oberbegriff des Anspruchs 13 sowie gemäß Anspruch 17 ein Kraftfahrzeug mit einer solchen Bremsanlage.

Zum Abbremsen eines Kraftfahrzeugs werden die Räder des Kraftfahrzeugs gebremst. Insbesondere bei Nutzfahrzeugen sind den Radbremsen der Räder jeweils Bremszylinder zugeordnet, wobei der erforderliche Bremsdruck in der Regel pneumatisch erzeugt wird. Fordert der Fahrer des Fahrzeugs eine Bremsung über ein Bremspedal an, so wird der Bremsdruck in einem Normalbremsmodus in Abhängigkeit der Fahrerbremsanforderung eingestellt. Bei bekannten Bremsanlagen wird oft mittels des Bremspedals ein Betriebsbremsventil betätigt, welches die Versorgung der Bremszylinder aus einem Druckvorrat beherrscht.

Alternativ zum Normalbremsmodus wird der Bremsdruck von einer Steuereinheit an den jeweiligen Radbremsen nach den Vorgaben der Steuereinheit eingestellt. DE 10 2009 058 154 A1 offenbart eine derartige Bremsanlage, deren Steuereinheit im Drucksteuermodus die erforderlichen Bremsdrücke bei Feststellung entsprechender Bremsbedürfnisse einstellt. Derartige Bremsbedürfnisse können beispielsweise Antiblockiereingriffe sein, wenn ein Bremsbedürfnis an bestimmten Rädern festgestellt wird. Die bekannte Bremsanlage berücksichtigt auch externe Bremsanforderungen, beispielsweise eines Fahrerassistenzsystems. Fahrerassistenzsysteme als von der Steuereinheit getrennt ausgeführte Systeme geben Signale entsprechend der externen Bremsanforderung an die Steuereinrichtung der Bremsanlage aus, beispielsweise über einen Datenbus. Der Steuereinheit wird auf diese Weise im Drucksteuermodus ein externer Sollverzögerungswert vorgegeben, das heißt ein Wert, welcher die vom Fahrerassistenzsystem gewünschte Verzögerung des Kraftfahrzeugs repräsentiert. Treten im Drucksteuermodus sowohl externe Bremsanforderungen als auch eine Fahrerbremsanforderung auf, das heißt der Fahrer bremst zu der externen Bremsanforderung hinzu, so stellt die Steuereinheit den Bremsdruck an den jeweiligen Radbremsen entsprechend einem resultierenden Sollverzögerungswert der Fahrzeugverzögerung ein. Die Steuereinheit ermittelt den resultierenden Sollverzögerungswert unter Verknüpfung des externen Sollverzögerungswerts gemäß der externen Bremsanforderung und einem der Fahrerbremsanforderung entsprechenden Größenwert.

Bei der bekannten Bremsanlage werden die Fahrerbremsanforderung und die externe Bremsanforderung additiv ausgeübt. Alternativ soll bei der bekannten Bremsanlage in einem Modus "Maximum" die Steuereinheit nur den Maximalwert der bereits von der Bremsanlage intern angeforderten Sollverzögerungswerte und der externen Sollverzögerungswerte gebildet werden, wobei die externe Bremsanforderung nur eingestellt wird, wenn sie höher ist als die interne Bremsanforderung. Durch die Verknüpfung der externen Bremsanforderung und der Fahrerbremsanforderung zu einem resultierenden Bremsdruck ist sichergestellt, dass eine externe Bremsanforderung im Drucksteuermodus auch bei Fehlen einer Fahrerbremsanforderung ausgesteuert wird.

In ähnlicher Weise offenbart DE 19654427 A1 ein Verfahren und eine Vorrichtung zur Regelung des Drucks in wenigstens einer Radbremse. Insbesondere betrifft die genannte Offenbarung das Verfahren zur Regelung des Drucks in wenigstens einer Radbremse, wobei ein Solldruck vorgegeben und ein Istdruck in der Radbremse ermittelt wird, wobei eine Ventilanordnung zum Druckaufbau und zum Druckabbau im Rahmen einer stufenlosen Druckregelung angesteuert wird, dass das wenigstens eine Ansteuersignal für die Ventilanordnung auf der Basis des aktuellen Arbeitspunkts der Ventilanordnung gebildet wird.

WO 99/06809 A1 offenbart ein Verfahren und eine Vorrichtung zur Ermittlung der Bremsleistungsfähigkeit und die Veränderung des Gewichts in dem Fahrzeug.

WO 98/13239 A1 betrifft eine schlupfgeregelte Druckluft -Bremsanlage für Nutzfahrzeuge mit elektromagnetisch betätigbaren Ventile. Die genannte Bremsanlage umfasst die Absperrventilen und Wechselventilen für die Schlupfregelung zu unterstützen. Insbesondere die Bremsanlage umfasst auch ein elektronisches Steuergerät, welches mit Raddrehungsensoren, Lenkwinkelsensors, Giergeschwindigkeitssensors zusammen eingebaut wird.

Im Drucksteuermodus mit einer Kombination aus externer Bremsanforderung und einer Fahrerbremsanforderung kommt es oft zu unerwünschten Ruckerscheinungen.

Der Erfindung liegt die Aufgabe zugrunde, bei der Einstellung des Bremsdrucks in einem Drucksteuermodus mit externer Bremsanforderung und zusätzlicher Fahrerbremsanforderung zuverlässig ein ruckfreies und stetiges Bremsverhalten des Kraftfahrzeugs zu gewährleisten.

Diese Aufgabe wird erfindungsgemäß durch ein Verfahren mit den Merkmalen des Anspruchs 1 gelöst. Die Aufgabe wird außerdem durch eine Bremsanlage eines Kraftfahrzeugs zur Durchführung des Verfahrens mit den Merkmalen des Anspruchs 13 gelöst. Ferner löst Anspruch 17 die Aufgabe durch ein Kraftfahrzeug mit einer derartigen Bremsanlage.

Erfindungsgemäß wird im Normalbremsmodus unter Berücksichtigung des der Steuereinheit eingegebenen Größenwerts der Fahrerbremsanforderung wenigstens einer Bremsung durch den Fahrer des Kraftfahrzeugs und eines gemessenen oder ermittelten Ist-Verzögerungswerts der Fahrzeugverzögerung ein Bremsleistungsindex ermittelt, welcher quantitativ die Bremswirkung der Radbremsen repräsentiert. Die erfindungsgemäße Bremsanlage umfasst Mittel zur Bestimmung des Ist-Verzögerungswerts der Fahrzeugverzögerung, nämlich in einer vorteilhaften Ausführungsform einen Beschleunigungssensor. In einer weiteren vorteilhaften Ausführungsform wird der Ist-Verzögerungswert durch Auswertung der Signale von Drehzahlsensoren der Radbremsen ermittelt. Der ermittelte Bremsleistungsindex charakterisiert die Bremswirkung der Radbremsen auf das Kraftfahrzeug bei der jeweiligen Bremsung und berücksichtigt in seiner quantitativen Information sämtliche Einflussgrößen auf das Bremsverhalten des Kraftfahrzeugs und die Performance, das heißt insbesondere die Wirksamkeit, der Bremsanlage. Durch die Ermittlung des Bremsleistungsindex werden schwer erfassbare Einflussgrößen auf das Bremsverhalten berücksichtigt, beispielsweise der Beladungszustand des Fahrzeugs oder Veränderungen des Reibwertes der Reibpartner der Radbremsen, nämlich Bremsscheibe oder Bremstrommel einerseits und Bremsbelag der Radbremsen andererseits, durch ein sich geändertes, insbesondere hohes, Temperaturniveau der Reibpartner. Außerdem wird durch die Ermittlung und Berücksichtigung des Bremsleistungsindex bei der Steuerung des Bremsdrucks der Einfluss der Fahrbahnneigung, das heißt der Einfluss eines Gefälles oder einer Steigung, einbezogen. In einer vorteilhaften Ausführungsform wird der Einfluss der Fahrbahnneigung zu Bremsbeginn als ein Offsetwert erfasst und bei der Ermittlung des Bremsleistungsindex berücksichtigend herausgerechnet.

Der Erfindung liegt dabei die Erkenntnis zugrunde, dass unstetiges Bremsverhalten oder sogar unerwünschtes Rucken des Fahrzeugs in Fahrsituationen mit kombinierter Fahrerbremsanforderung und externer Bremsanforderung oft darauf zurückzuführen sind, dass die sich einstellende Ist-Verzögerung von der ermittelten Soll-Verzögerung stark abweicht.

Wird erfindungsgemäß im Drucksteuermodus der im Normalbremsmodus gelernte und bereitgehaltene Bremsleistungsindex mit dem Größenwert der Fahrerbremsanforderung verknüpft, so werden Veränderungen in der Performance der Bremsanlage aufgrund veränderbarer Umstände wie verändertem Beladungszustand oder verändertem Reibbeiwert der Reibpartner der Radbremsen ausgeglichen. Aufgrund dessen ist die Abweichung der Ist-Fahrzeugverzögerung von der Soll-Fahrzeugverzögerung, welche durch Steuerung des Bremsdrucks ausgeglichen wird, reduziert.

Der Bremsleistungsindex ist als relative Kennzahl zu verstehen, welche den Größenwert der Fahrerbremsanforderung und die Ist-Verzögerung berücksichtigt. Je nach Auslegung der Bremsanlage und insbesondere der Auswertung der Fahrerbremsanforderung wird der Bremsleistungsindex dimensionsbehaftet oder dimensionslos ermittelt.

Die Erfindung sieht demnach zur Verbesserung des Bremsverhaltens im Drucksteuermodus mit einer Kombination aus externer Bremsanforderung und Fahrerbremsanforderung das Einlernen des Bremsleistungsindex vor, welcher die Performance der Radbremsen, das heißt insbesondere deren Wirksamkeit, charakterisiert. Im Normalbremsmodus hat der Bremsleistungsindex keinen Einfluss auf die Einstellung des Bremsdrucks, sondern wird ausschließlich zur Berücksichtigung der Fahrsituation und der Fahrzeugcharakteristik gelernt und für den Drucksteuermodus bereitgehalten.

In einer vorteilhaften Ausführungsform der Erfindung wird der Bremsleistungsindex ermittelt, indem bei einer Bremsung nach einer vorgegebenen Umrechnungsvorschrift ein der Fahrerbremsanforderung entsprechender Fahrersollverzögerungswert der Fahrzeugverzögerung bestimmt und mit dem Ist-Verzögerungswert der Fahrzeugverzögerung in Beziehung gesetzt wird. Die Umrechnungsvorschrift wird im Voraus ermittelt und ist in der Steuereinheit implementiert beziehungsweise ist der Steuereinheit zur Verfügung gestellt.

Da in der Umrechnungsvorschrift Fahrersollverzögerungswerte entsprechend der Fahrerbremsanforderung in der gleichen Dimension wie die externe Bremsanforderung berücksichtigt wird, wird im Drucksteuermodus bei einer späteren Berücksichtigung des im Normalbremsmodus gelernten Bremsleistungsindex die Ermittlung des Fahrersollverzögerungswerts vereinfacht. Dadurch werden Umrechnungsvorgänge auf ein Minimum reduziert. Sowohl der Fahrersollverzögerungswert als auch die externe Bremsanforderung liegen in der gleichen physikalischen Größe vor, nämlich in der Dimension Verzögerung (negative Beschleunigung), und sind daher ohne weitere Rechenschritte miteinander verknüpfbar.

Vorteilhaft wird der Bremsleistungsindex als Quotient des Fahrersollverzögerungswerts und des Ist-Verzögerungswerts angenommen, so dass direkte Rückschlüsse und Verknüpfungen möglich sind. Ein Wert des Bremsleistungsindex kleiner als 1 erlaubt den Rückschluss, dass die Bremswirkung der Radbremsen besser ist, als bei der Festlegung der Umrechnungsvorschrift vorgesehen war. Ist der Bremsleistungsindex größer als 1, ist die Performance der Bremsanlage schlechter als bei der Ermittlung der Umrechnungsvorschrift im Voraus angenommen wurde.

In einer vorteilhaften Ausführungsform umfasst die der Steuereinheit vorgegebene Umrechnungsvorschrift einen im Voraus bestimmten Bezugswert der Fahrerbremsanforderung beziehungsweise der physikalischen Größe, in welcher die Fahrerbremsanforderung der Steuereinheit mitgeteilt wird, und einen mit dem Bezugswert verknüpften Bezugsverzögerungswert. Als Fahrersollverzögerungswert, welcher der Ermittlung des Bremsleistungsindex zugrunde liegt, wird ein Anteil des vorgegebenen Bezugsverzögerungswerts ermittelt, welcher einem Anteil des Größenwerts der Fahrerbremsanforderung an den Bezugswert der Fahrerbremsanforderung entspricht. Vorzugsweise wird der Wert des prozentualen Anteils des Bezugsverzögerungswerts, welcher die Größe des Fahrersollverzögerungswerts bestimmt, gleich dem zuvor bestimmten Anteil des Bezugswerts der Fahrerbremsanforderung angenommen. Die Umrechnungsvorschrift ist ein vorgegebenes Umrechnungsaxiom, in welchem Eckwerte einer Skala angenommen sind, nämlich zum einen Null und zum anderen der als Bezugswert beziehungsweise Bezugsverzögerungswert vorgesehene Eckpunkt. Sämtliche Anteile an dem Bezugsverzögerungswert bilden dabei eine Verhältnisskala, wobei jedem Anteil der Verhältnisskala ein entsprechender Anteil der Fahrerbremsanforderung zugeordnet ist. Beispielsweise kann als Axiom für die Umrechnungsvorschrift ein Bezugsverzögerungswert von 1 g (etwa 10 m/s²) mit dem Bezugswert der Fahrerbremsanforderung verknüpft sein, so dass mit dem Umrechnungsaxiom angenommen wird, dass eine Fahrerbremsanforderung von 100 % eine Bremsverzögerung von 100 % g (10 m/s²) bewirkt. Entsprechend einer Verhältnisskala bewirkt somit eine Fahrerbremsanforderung von 0 % eine Bremsverzögerung von 0 % g. Mit einer derartigen Umrechnungsvorschrift auf der Grundlage eines Umrechnungsaxioms mit Verknüpfung von Bezugsverzögerungswert und im Voraus bestimmten Bezugswerten der Fahrerbremsanforderung kann jedem Größenwert der Fahrerbremsanforderung ein bestimmter Anteil an der Bezugsverzögerung zugeordnet werden.

Vorteilhaft wird mit der Umrechnungsvorschrift jedem Größenwert der Fahrerbremsanforderung ein bestimmter Anteil an den Bezugswert der Fahrerbremsanforderung zugeordnet und mit verhältnismäßig entsprechenden Anteilen der Bezugsverzögerung verknüpft. Wird beispielsweise die Fahrerbremsanforderung der Steuereinheit in der Dimension Druck eingegeben, so kann beispielsweise einem Druck von 2,0 bar ein Anteil an dem Bezugswert der Fahrerbremsanforderung von 20 % zugeordnet werden. Beträgt im Betrieb des Fahrzeugs der gemessene oder ermittelte Ist-Verzögerungswert beispielsweise 30 % g, so ergibt sich dann als Bremsleistungsindex der Quotient des Fahrersollverzögerungswerts und des Ist-Verzögerungswerts als 20 % g/ 30 % g = 0,66.

Gemäß der bevorzugten Ausführungsform der Erfindung wird im Drucksteuermodus ein der Fahrerbremsanforderung entsprechender Fahrersollverzögerungswert ermittelt und mit dem Bremsleistungsindex verknüpft. Vorteilhaft wird dabei der Fahrersollverzögerungswert im Drucksteuermodus aus einem die Fahrerbremsanforderung repräsentierenden Größenwert, beispielsweise einem Druckwert, oder einer prozentualen Fahrer-Bremsanforderung unter Einbeziehung der vorgegebenen Umrechnungsvorschrift ermittelt. Anders ausgedrückt ermittelt die Steuereinheit nach dem Einlesen der Fahrerbremsanforderung den Fahrersollverzögerungswert in der entgegengesetzten Richtung wie bei der Vorgehensweise zur Bestimmung des Bremsleistungsindex während des Normalbremsmodus. Es wird nämlich die Fahrerbremsanforderung mit dem bereitgehaltenen Bremsleistungsindex verknüpft, wobei das Ergebnis ein Fahrersollverzögerungswert in der Dimension Verzögerung (das heißt negative Beschleunigung) ist. Eine verbesserte Anpassung an die Performance der Bremsanlage während des Betriebs des Kraftfahrzeugs ist unter Berücksichtigung der die Performance beeinflussenden äußeren Einflüsse auf das Kraftfahrzeug gegeben, wenn bei weiteren Bremsungen im Normalbremsmodus jeweils aktuelle Werte des Bremsleistungsindex ermittelt werden. Der für den Drucksteuermodus bereitgehaltene Bremsleistungsindex wird unter Berücksichtigung des aktuellen Werts des Bremsleistungsindex von Bremsung zu Bremsung adaptiert und damit zunehmend genauer, feiner und aussagekräftiger.

Wird gemäß der Erfindung sowohl die Fahrerbremsanforderung als auch die externe Bremsanforderung in der Dimension Verzögerung ermittelt und miteinander verknüpft, so wird in einer besonders bevorzugten Ausführungsform der Ist-Verzögerungswert mit dem resultierenden Sollverzögerungswert als Führungsgröße geregelt. Die erfindungsgemäße Bremsanlage weist dabei einen Regelkreis zur Einstellung des Ist-Verzögerungswerts auf, wobei in dem Regelkreis der Ist-Verzögerungswert die Regelgröße, der resultierende Sollverzögerungswert die Führungsgröße und der Bremsdruck die Stellgröße bildet. Durch Variation des Bremsdrucks wird der Ist-Verzögerungswert an den Sollverzögerungswert angeglichen, so dass der Bremsdruck durch Regelung der Ist-Verzögerung optimal eingestellt wird.

Die Steuereinheit ist in der bevorzugten Ausführungsform einer erfindungsgemäßen Bremsanlage Teil eines Antiblockiersystems und wertet dynamische Zustandsgrößen der zu bremsenden Räder aus. Bei Vorliegen einer Blockierneigung eines oder mehrerer Räder steuert oder regelt die Steuereinheit den Bremsdruck der betroffenen Radbremsen im Drucksteuermodus. Eingriffsmaßnahmen des Antiblockiersystems können somit als interne Bremsanforderungen bezeichnet werden, welche die Steuereinheit selbst aufgrund der Laufzeit zugeführten Messgrößen der dynamischen Zustandsgrößen der zu bremsenden Räder ermittelt und gegebenenfalls den Bremsdruck im Drucksteuermodus an bestimmten Radbremsen einstellt. Der Drucksteuermodus ist dabei eine Betriebsart, in welchem die Steuereinheit aktiv den Bremsdruck beeinflusst. Der Bremsdruck wird gemäß der Erfindung sowohl für Eingriffsmaßnahmen des Antiblockiersystems als auch für die Einsteuerung externer Bremsanforderung, wie z.B. einer Notbremsung, eingesetzt.

Den Ist-Verzögerungswert, der für die erfindungsgemäße Bestimmung eines Bremsleistungsindex ermittelt wird, bestimmt die Steuereinheit aus gemessenen dynamischen Zustandsgrößen der zu bremsenden Räder. Die Messungen der dynamischen Zustandsgrößen wertet die Steuereinheit außerdem für die Antiblockierfunktion aus. In einer weiteren vorteilhaften Ausführungsform werden außerdem Veränderungen der Fahrbahnneigung berücksichtigt und deren Einfluss auf die Bestimmung des Bremsleistungsindex verringert, indem der Ist-Verzögerungswert auf der Grundlage dynamischer Zustandsgrößen und dem Messsignal eines Längsbeschleunigungssensors ermittelt wird. Bei Vorliegen beider Signale ist es leicht möglich, eine sich während einer Bremsung ändernde Fahrbahnneigung zu erkennen.

Die Steuereinheit steuert den Bremsdruck im Drucksteuermodus jeweils über ein Drucksteuerventil der jeweiligen Radbremse. Die Bremskreise der Drucksteuerventile sind über Ansteuerung jeweils eines Aktivierungsventils pro Bremskreis mit einem Druckmittelvorrat verbindbar. Die Aktivierungsventile werden dabei von der Steuereinheit geschaltet. Bei Beendigung des Drucksteuermodus wird das Aktivierungsventil des betreffenden Bremskreises von der Steuereinheit in die Schließstellung gebracht, wodurch die Verbindung der angeschlossenen Drucksteuerventile mit dem Druckmittelvorrat getrennt ist. Der Bremsdruck an den Radbremsen ist im Normalbremsmodus allein in Abhängigkeit von der Fahrerbremsanforderung beeinflussbar, nämlich insbesondere über ein Betriebsbremsventil, dessen Stellung mittels eines Fahrpedals in der Fahrerkabine vom Fahrer des Kraftfahrzeugs veränderbar ist.

Die Aktivierungsventile sind vorteilhaft als 3/2-Wege-Ventile ausgebildet, wodurch die Druckleitung hinter dem Aktivierungsventil bedarfsweise entlüftet werden kann.

Die Anordnung der Aktivierungsventile in den jeweiligen Bremskreisen ermöglicht eine sofortige Beendigung des Drucksteuermodus durch Trennen der Drucksteuerventile von dem jeweiligen Druckmittelvorrat, so dass rasch vom Drucksteuermodus in den Normalbremsmodus umgeschaltet werden kann.

Die Erfindung ist insbesondere bei Kraftfahrzeugen vorteilhaft, welche mit pneumatisch betätigbaren Radbremsen ausgestattet sind. Verwendet wird sie bevorzugt bei Nutzfahrzeugen und Fahrzeugkombinationen mit einem Zugfahrzeug und einem oder mehreren Anhängefahrzeugen.

Ausführungsbeispiele der Erfindung sind nachstehend anhand der Zeichnung näher erläutert. Es zeigen:
- Fig. 1: ein pneumatisches und elektrisches Schema einer Bremsanlage eines Nutzfahrzeugs,
- Fig. 2: ein Flussschaubild eines Ausführungsbeispiels eines Verfahrens zum Einstellen der Bremsdrücke in einer Bremsanlage,
- Fig. 3: ein Zuordnungsschema für ein Ausführungsbeispiel der Ermittlung eines Sollverzögerungswerts anhand einer Zuordnungsvorschrift,
- Fig. 4: ein Flussschaubild des Ausführungsbeispiels der Ermittlung eines Sollverzögerungswerts gemäß Fig. 3.

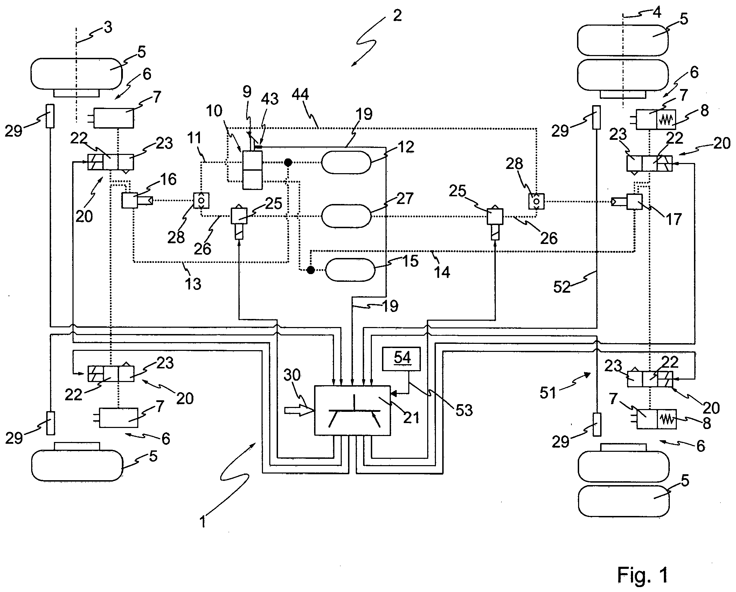

Fig. 1 zeigt einen elektrisch-pneumatischen Plan einer Bremsanlage 1 eines Kraftfahrzeugs 2, insbesondere eines Nutzfahrzeugs. Elektrische Leitungen sind mit Volllinien und pneumatische Leitungen mit punktierten Linien dargestellt. Das Kraftfahrzeug 2 umfasst im gezeigten Ausführungsbeispiel zwei Achsen, nämlich eine Vorderachse 3 und eine Hinterachse 4, an denen jeweils beidseitig Räder 5 angeordnet sind. Zum Abbremsen der Räder 5 ist jedem Rad 5 eine Radbremse 6 zugeordnet. Die Radbremsen 6 sind pneumatisch betätigbar und weisen jeweils einen Bremszylinder 7 auf. Die Radbremsen 6 üben entsprechend dem jeweils im Bremszylinder 7 anliegenden pneumatischen Bremsdruck eine Bremskraft auf das drehende Rad 5 aus. An den Rädern 5 der Hinterachse 4 sind dabei Bremszylinder 7 mit Federspeichern 8 vorgesehen, welche einer Feststellbremse dienen.

In der Fahrerkabine des Kraftfahrzeugs 2 ist ein Bremspedal 9 angeordnet, welches an ein Betriebsbremsventil 10 gekoppelt ist. Der Fahrer des Kraftfahrzeugs 2 kann durch Betätigen des Bremspedals 9 pneumatischen Druck zu den Bremszylindern 7 durchschalten und somit die Radbremsen 6 betätigen. Hierzu beherrscht das Betriebsbremsventil 10 pneumatische Bremsleitungen 11, 44 zwischen den Druckmittelvorräten 12, 15 und den Bremszylindern 7.

Im gezeigten Ausführungsbeispiel sind die Radbremsen 6 der Vorderachse 3 einem gemeinsamen ersten Bremskreis 13 zugeordnet, während die Radbremsen 6 der Hinterachse 4 über einen zweiten Bremskreis 14 betätigbar sind. Der erste Druckmittelvorrat 12 ist dabei dem ersten Bremskreis 13 zugeordnet und über die Bremsleitung 11 an die Bremszylinder 7 der Vorderachse 3 angeschlossen. Der zweite Bremskreis 14 der Hinterachse 4 wird über einen zweiten Druckmittelvorrat 15 mit Druckmittel versorgt. Der zweite Bremskreis 14 ist analog dem ersten Bremskreis 13 aufgebaut, das heißt, dass die Bremsleitung 44 zwischen dem zweiten Druckmittelvorrat 15 zu den Radbremsen 6 der Hinterachse 4 über das Betriebsbremsventil 10 freigebbar ist und daher der Bremsdruck in Abhängigkeit von der Stellung des Bremspedals 9 einstellbar ist.

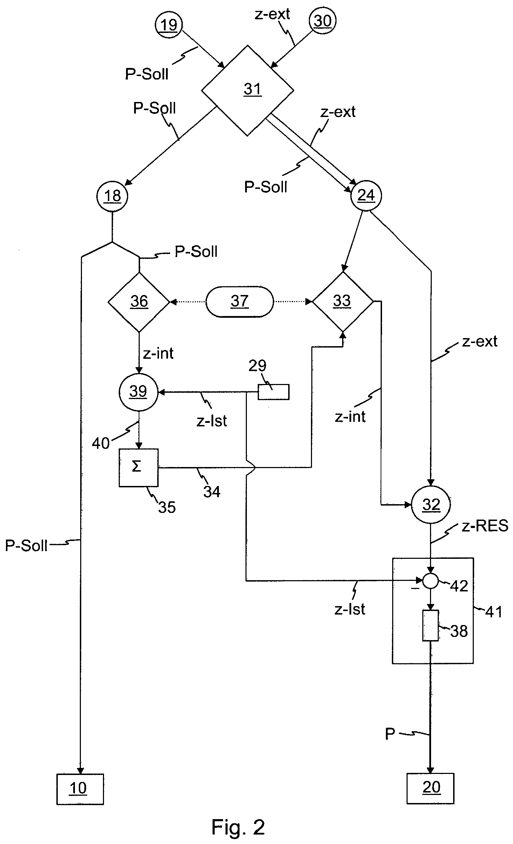

Im ersten Bremskreis 13 ist ein pneumatisch betätigbares Relaisventil 16 und analog im zweiten Bremskreis 14 ein Relaisventil 17 angeordnet. Die pneumatisch betätigbaren Relaisventile 16, 17 werden über den pneumatischen Druck aus dem jeweils angeschlossenen Druckmittelvorrat 12, 15 geöffnet. Wird das Betriebsbremsventil 10 geöffnet, schalten die Relaisventile 16, 17 anstehenden Bremsdruck zu den angeschlossenen Radbremsen 6 durch. In einem Normalbremsmodus (Bezugszeichen 18 in Fig. 2) ist der Bremsdruck in den Radbremsen 6 in Abhängigkeit der Fahrerbremsanforderung (Bezugszeichen 19 in Fig. 2) einstellbar. Im Normalbremsmodus 18 hat daher der Fahrer des Kraftfahrzeugs 2 über die Betätigung des Bremspedals 9 die volle Kontrolle über das Bremsverhalten des Kraftfahrzeugs 2.

Jeder Radbremse 6 der Bremsanlage 1 ist ein Drucksteuerventil 20 zugeordnet, welche von einer Steuereinheit 21 elektrisch angesteuert werden. Die Drucksteuerventile 20 der Radbremsen 6 der Vorderachse 3 sind im ersten Bremskreis 13 und die Drucksteuerventile 20 der Hinterachse 4 im zweiten Bremskreis 14 angeordnet. Die Drucksteuerventile 20 sind jeweils eine Kombination von wenigstens zwei Magnetventilen, nämlich einem Einlassventil 22 und einem Auslassventil 23. Das Einlassventil 22 dient dabei prinzipiell zur Druckerhöhung beziehungsweise zum Halten des Drucks im Bremszylinder 7, während das Auslassventil 23 zur Reduzierung des Bremsdrucks geöffnet wird und den jeweils angeschlossenen Bremszylinder 7 entlüftet. Das Einlassventil 22 und das Auslassventil 23 sind im Ausführungsbeispiel 2/2-Wege-Ventile, welche elektrisch von der Steuereinheit 21 ansteuerbar sind. Im Normalbremsmodus 18 sind die Einlassventile 22 in die geöffnete und die Auslassventile 23 in die geschlossene Stellung geschaltet, so dass der Bremsdruck durchgeschaltet ist.

Die Drucksteuerventile 20 werden von der Steuereinheit 21 in einem Drucksteuermodus (Bezugszeichen 24 in Fig. 2) angesteuert. Im Drucksteuermodus 24 übernimmt die Steuereinheit 21 die Einstellung des Bremsdrucks der jeweiligen Radbremsen 6 durch entsprechende Ansteuerung der Drucksteuerventile 20. Jedem Bremskreis 13, 14 ist ein elektrisch betätigbares Aktivierungsventil 25 zugeordnet, welche von der Steuereinheit 21 betätigbar sind. Jedes Aktivierungsventil 25 ist als 3/2-Wege-Ventil ausgebildet, wodurch die Druckleitung hinter dem Aktivierungsventil bedarfsweise entlüftet werden kann. Im Drucksteuerbetrieb 24 wird durch Ansteuerung der Aktivierungsventile 25 Bremsdruck zu den Drucksteuerventilen 20 durchgeschaltet. Im gezeigten Ausführungsbeispiel beherrschen die Aktivierungsventile 25 jeweils eine Druckleitung 26 von einem dritten Druckmittelspeicher 27 zu den Relaisventilen 16, 17. Durch Betätigung des Aktivierungsventils 25 des ersten Bremskreises 13 kann somit das Relaisventil 16 der Vorderachse 3 betätigt werden. Analog wird das Relaisventil 17 der Hinterachse 4 durch Betätigung des Aktivierungsventils 25 des zweiten Bremskreises 14 betätigt.

Das Betriebsbremsventil 10 und die Aktivierungsventile 25 sind jeweils über ein Doppelrückschlagventil 28 auf den pneumatischen Steuereingang des Relaisventils 16, 17 des jeweiligen Bremskreises 13, 14 gekoppelt.

Die Steuereinheit 21 ist dazu ausgebildet und konfiguriert, unabhängig von der Fahrerbremsanforderung 19 selbsttätig im Drucksteuermodus 24 auf den Bremsvorgang einzuwirken. Hierzu ermittelt die Steuereinheit 21 einen bestimmten Brems-Solldruck und steuert diesen Brems-Solldruck an den jeweiligen Radbremsen 6 durch Betätigung der Drucksteuerventile 22 ein. Die Entscheidung über eine Bremsmaßnahme und Bestimmung des entsprechenden Brems-Solldrucks ermittelt die Steuereinheit 21 auf der Grundlage der ihr zugeführten Informationen.

Die Bremsanlage 1 umfasst ein Antiblockiersystem 51, wobei dessen wesentliche Elemente die Steuereinheit 21 und Sensoren zur Ermittlung der Blockierneigung der Räder 5 sind. Der Steuereinheit 21 werden laufend ermittelte dynamische Zustandsgrößen 52 der Räder 5 zugeführt. Hierzu ist jedem Rad 5 ein Drehzahlsensor 29 zugeordnet, dessen Messsignale der Steuereinheit 21 eingegeben werden. Bei Feststellen einer Blockierneigung eines oder mehrerer Räder greift das Antiblockiersystem über die Steuereinheit 21 durch Steuerung des Bremsdrucks an der betreffenden Radbremse 6 im Drucksteuermodus 24 in den Bremsvorgang ein.

Durch Einstellung der Bremsdrücke im Drucksteuermodus 24 setzt die Steuereinheit 21 nicht nur interne Bremsanforderungen um, welche auf der Grundlage der ihr zugeführten dynamischen Zustandsgrößen des Fahrzeugs vorgegeben sind, sondern auch externe Bremsanforderungen 30. Die externe Bremsanforderung 30 wird von einem Fahrerassistenzsystem vorgegeben. Unter einer externen Bremsanforderung 30 ist dabei die Anforderung von Bremsleistung durch ein oder mehrere Fahrerassistenzsysteme oder andere externe Systeme zu verstehen, welche aufgrund ihrer Funktion im Kraftfahrzeug 2 ein Bremsmanöver anfordern. Bei Empfang einer externen Bremsanforderung 30 schaltet die Steuereinheit 21 vom Normalbremsmodus 18 in den Drucksteuermodus 24 und übernimmt die Steuerung beziehungsweise Regelung der Bremsdrücke an den einzelnen Rädern 5.

Wird die externe Bremsanforderung 30 zurückgenommen, das heißt, dass die Steuereinheit 21 keine externe Bremsanforderung 25 mehr empfängt, so leitet die Steuereinheit 21 eine Beendigung des Drucksteuermodus 24 ein, sofern keine Fahrerbremsanforderung 19 gegeben ist, das heißt, sofern der Fahrer nicht zusätzlich bremst. Diese Situation ist nachstehend anhand von Fig. 2 noch näher erläutert. Mit der Beendigung des Drucksteuermodus 24 erhält der Fahrer des Kraftfahrzeugs 2 somit wieder die volle Kontrolle über die Betätigung der Radbremsen 6 im Normalbremsmodus 18.

Die Bremsanlage 1 umfasst einen Bremssignalgeber 43, welcher signalübertragend mit der Steuereinheit 21 verbunden ist. Das Ausgangssignal des Bremssignalgebers 43 entspricht quantitativ der Fahrerbremsanforderung 19, wobei beispielsweise die Stellung oder ein Betätigungsweg des Bremspedals 9, ein Betätigungsweg eines Bauteils des Betriebsbremsventils 10 oder ein vom Betriebsbremsventil 10 ausgesteuerter Bremsdruck gemessen werden kann. Über die signalübertragende Verbindung wird der Steuereinheit 21 die Fahrerbremsanforderung 19 mitgeteilt. Auf diese Weise ist die Steuereinheit 21 in der Lage, im Drucksteuermodus 24ein Hinzubremsen des Fahrers, das heißt eine zusätzliche und gleichzeitig zur externen Bremsanforderung 30 auftretende Fahrerbremsanforderung 19 zu berücksichtigen. Das Ausgangssignal des Bremssignalgebers 43 vermittelt der Steuereinheit im Drucksteuermodus 18 Größenwerte P-Soll (Fig. 2) mit quantitativen Informationen über die Fahrerbremsanforderung 19. Im Ausführungsbeispiel gemäß Fig. 2 wird der Steuereinheit 21 ein Solldruck als Größenwert P-Soll der Fahrerbremsanforderung 19 vorgegeben.

Die Steuereinheit 21 berücksichtigt sowohl die Fahrerbremsanforderung 19 als auch die externe Bremsanforderung 30 in einem Verfahren zur Bestimmung des Bremsdrucks, welches nachstehend anhand von Fig. 2 beschrieben ist.

Im Normalbremsmodus 18 wird der Bremsdruck stets allein in Abhängigkeit der Fahrerbremsanforderung 19 eingestellt. Die Fahrerbremsanforderung 19 wird der Steuereinheit 21 (Fig. 1) durch einen die Fahrerbremsanforderung 19 repräsentierenden Größenwert vorgegeben. Im gezeigten Ausführungsbeispiel wird der Größenwert als einzustellender Soll-Bremsdruck P-Soll vorgegeben. Im Normalbremsmodus 18 stellt die Bremsanlage entsprechend der Betätigung des Betriebsbremsventils 10 (Fig. 1) ein. Empfängt die Steuereinheit 21 eine externe Bremsanforderung 30, so wird in den Drucksteuermodus 24 umgeschaltet. Hierzu erfasst die Steuereinheit 21 in einem Moduserfassungsschritt 31 die zu berücksichtigenden Bremsanforderungen, nämlich die Fahrerbremsanforderung 19 und die externe Bremsanforderung 30. Liegt keine externe Bremsanforderung 30 vor, so wird der Bremsdruck an den Radbremsen entsprechend dem Bremssolldruck (Größenwert P-Soll) eingestellt. Im Normalbremsmodus bleiben die Einlassventile 22 der Drucksteuerventile 20 geöffnet und die Auslassventile 23 geschlossen, wodurch der Fahrer des Kraftfahrzeugs 2 die volle Kontrolle über das Bremsmanöver hat.

Empfängt die Steuereinheit 21 eine externe Bremsanforderung 30, so stellt die Steuereinheit 21 im Drucksteuermodus 24 an den Radbremsen 6 einen Bremsdruck P unter Berücksichtigung der externen Bremsanforderung 30 und einer gegebenenfalls gleichzeitigen Fahrerbremsanforderung 19 ein. Liegen sowohl externe Bremsanforderung 30 als auch eine Fahrerbremsanforderung 19 vor, beispielsweise wenn der Fahrer während des Drucksteuermodus 24 hinzubremst, so ermittelt die Steuereinheit den einzustellenden Bremsdruck P unter Verknüpfung der Fahrerbremsanforderung 19 und der externen Bremsanforderung 30. Hierzu ist ein Verknüpfungsglied 32 vorgesehen.

Die externe Bremsanforderung 30 wird der Steuereinheit 21 als externer Sollverzögerungswert z-ext vorgegeben. Zur Verknüpfung des externen Sollverzögerungswerts z-ext mit der Fahrerbremsanforderung 19 wird der Größenwert P-Soll der Fahrerbremsanforderung 19 in einen Fahrersollverzögerungswert z-int in der Dimension Verzögerung umgerechnet. Der Fahrersollverzögerungswert z-int der Fahrzeugverzögerung wird mit dem externen Sollverzögerungswert z-ext von dem Verknüpfungsglied 32 zu einem resultierenden Sollverzögerungswert z-RES verknüpft, im Ausführungsbeispiel addiert. Die Umrechnung des Größenwerts der Fahrerbremsanforderung 19 in einen entsprechenden Fahrersollverzögerungswert z-int erfolgt in später noch erläuternder Weise in einem Umrechnungsschritt 33.

Im Normalbremsmodus 18 wird unter Berücksichtigung des Größenwerts P-Soll der Fahrerbremsanforderung 19, das heißt des vom Fahrer vorgegebenen Sollbremsdrucks, während einer Bremsung und eines gemessenen oder ermittelten Ist-Verzögerungswerts z-Ist der Fahrzeugverzögerung ein Bremsleistungsindex 34 ermittelt, welcher quantitativ die Bremswirkung der Radbremsen repräsentiert. Den Ist-Verzögerungswerts z-Ist der Fahrzeugverzögerung ermittelt die Steuereinheit 21 durch Auswertung der dynamischen Zustandsgrößen 52 der zu bremsenden Räder 5. Im gezeigten Ausführungsbeispiel ist der Steuereinheit 21 außerdem ein Längsbeschleunigungssensor 54 zugeordnet, dessen Messsignal 53 der Steuereinheit 21 eingegeben wird. Die Steuereinheit 21 ermittelt den Ist-Verzögerungswert z-Ist auf der Grundlage der dynamischen Zustandsgrößen 52 und dem Messsignal 53 des Längsbeschleunigungssensors 54, so dass Änderungen der Fahrbahnneigung während des Bremsmanövers bei der Bestimmung des Bremsleistungsindex 34 berücksichtigt sind.

Der Bremsleistungsindex 34 wird in einem Ermittlungsschritt 36 ermittelt, in dem bei einer Bremsung nach einer vorgegebenen Umrechnungsvorschrift 37 ein der Fahrerbremsanforderung 19 entsprechender Fahrersollverzögerungswert z-int bestimmt und mit einem gemessenen oder ermittelten Ist-Verzögerungswert z-Ist in Beziehung gesetzt wird. Der Ist-Verzögerungswert z-Ist kann durch einen nicht dargestellten Längsbeschleunigungssensor der Bremsanlage 1 (Fig. 1) bereitgestellt werden. Alternativ wird der Ist-Verzögerungswert z-Ist aus den Sensorsignalen der Drehzahlsensoren 29 ermittelt.

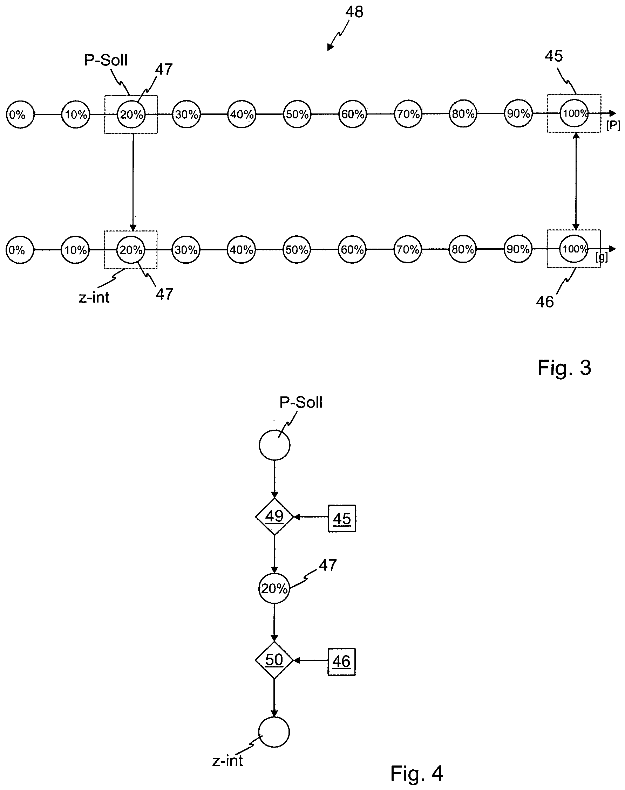

Ein Ausführungsbeispiel zur Ermittlung des Fahrersollverzögerungswerts z-int anhand der vorgegebenen Umrechnungsvorschrift 37 ist nachstehend anhand von Fig. 3 und Fig. 4 erläutert. Die Umrechnungsvorschrift 37 umfasst einen im Voraus bestimmten Bezugswert 45 der Fahrerbremsanforderung 19 und einen damit verknüpften Bezugsverzögerungswert 46, wobei als Fahrersollverzögerungswert z-int ein Anteil 47 an dem angenommenen Bezugsverzögerungswert 46 ermittelt wird, welcher dem Anteil der Fahrerbremsanforderung 19 an dem Bezugswert 45 der Fahrerbremsanforderung 19 zugeordnet ist. Die Umrechnungsvorschrift 37 legt dabei ein Umrechnungsaxiom fest. Beispielsweise kann angenommen werden, dass eine Fahrerbremsanforderung 19 mit einem Bezugswert 45 von 100 % eine Fahrzeugverzögerung mit dem Bezugsverzögerungswert 46 von 100 % g (10 m/s²) bewirkt. Der Bezugswert 45 der Fahrerbremsanforderung 19 und der damit verknüpfte Bezugsverzögerungswert 46 bilden den Referenzpunkt auf einer Verhältnisskala, bei der für eine Fahrerbremsanforderung von 0 % eine effektive Fahrzeugverzögerung von 0 % g angenommen ist.

Mit der so getroffenen Festlegung im Sinne eines Umrechnungsaxioms wird in der Umrechnungsvorschrift 37 jedem Größenwert (Bremssolldruck P-Soll) der Fahrerbremsanforderung 19 ein bestimmter Anteil 47 an dem Bezugswert 45 der Fahrerbremsanforderung 19, das heißt ein entsprechender Prozentsatz, zugeordnet und mit verhältnismäßig entsprechenden Anteilen der Bezugsverzögerung 46 verknüpft. Der Wert des prozentualen Anteils 47 des Bezugsverzögerungswerts 46, welcher die Größe des Fahrersollverzögerungswerts z-int bestimmt, wird gleich dem zuvor bestimmten Anteil 47 des Bezugswerts 45 der Fahrerbremsanforderung 19 angenommen. Wird die Fahrerbremsanforderung mit der physikalischen Größe Druck vorgegeben, nämlich hier einem Sollbremsdruck, so wird durch Division 49 des aktuellen Größenwerts P-Soll des Sollbremsdrucks und des Bezugswerts 45 dem vom Fahrer angeforderten Größenwert P-Soll jeweils ein bestimmter Anteil 47 an dem Bezugswert 45 der Fahrerbremsanforderung zugeordnet. Wird beispielsweise ein Anteil 47 an dem Bezugswert 45 der Fahrerbremsanforderung von 20 % ermittelt, beispielsweise mit einem Sollbremsdruck von 2,0 bar, so wird in einer Verknüpfung 50 des Anteils 47 mit dem Bezugsverzögerungswert 46 entsprechend der Festlegung der Umrechnungsvorschrift 37 ein Fahrersollverzögerungswert z-int mit der Dimension 20 % g (etwa 2 m/s²) bestimmt.

In einem Indexermittlungsschritt 39 wird ein aktueller Wert 40 des Bremsleistungsindex 34 ermittelt, indem der Fahrersollverzögerungswert z-int in Beziehung gesetzt wird mit dem gemessenen Ist-Verzögerungswert z-Ist. Der Bremsleistungsindex 34 wird dabei als Quotient des Fahrersollverzögerungswerts z-int und des Ist-Verzögerungswerts z-Ist angenommen. Beträgt der gemessene Ist-Verzögerungswert z-Ist beispielsweise 30 % g, so ergibt sich im Indexermittlungsschritt 39 ein Bremsleistungsindex 34 aus Fahrersollverzögerungswert z-int (20 % g) /Ist-Verzögerungswert (30 % g) =0,66. Ist der Bremsleistungsindex kleiner als 1, lässt sich daraus auf eine wirksamere Performance der Bremsanlage 1 schließen, als bei der Festlegung der Umrechnungsvorschrift 37 im Voraus angenommen wurde. Ist der Bremsleistungsindex größer als 1, ist die Performance der Bremsanlage 1 schlechter.

Im Normalbremsmodus werden bei weiteren Bremsungen fortlaufend jeweils aktuelle Werte 40 des Bremsleistungsindex 34 ermittelt. Der für den Drucksteuermodus bereitgehaltene Bremsleistungsindex 34 wird unter Berücksichtigung des aktuellen Werts 40 des Bremsleistungsindex 34 adaptiert. Mit jeder Bremsung wird daher der Bremsleistungsindex 34, welcher für den Drucksteuermodus 24 bereitgehalten wird, feiner, genauer und aussagekräftiger adaptiert. Der Bremsleistungsindex 34 berücksichtigt dabei äußere und schwer ermittelbare Einflüsse auf das Bremsverhalten des Fahrzeugs 2, beispielsweise die Straßenoberfläche, aber auch den Beladungszustand des Nutzfahrzeugs, welcher sich maßgeblich auf das Bremsverhalten auswirkt und Veränderungen des Reibwertes der Reibpartner der Radbremsen, die zum großen Teil temperaturbedingt sind.

In weiteren, nicht in Fig. 2 dargestellten, Ausführungsbeispielen wird der Einfluss auf die Ermittlung der Fahrzeugverzögerung z-Ist, der von einer Fahrbahnneigung eines Gefälles oder einer Steigung herrührt, berücksichtigt, indem die Fahrzeugverzögerung z-Ist, die zu Beginn der Bremsung durch den Fahrer des Kraftfahrzeugs vorliegt, als ein Offsetwert erfasst und bei der Ermittlung des Bremsleistungsindex 34 berücksichtigend herausgerechnet wird.

Alternativ zur Berücksichtigung eines Offsetwerts wird in einem weiteren Ausführungsbeispiel ab Beginn der Bremsung durch den Fahrer des Kraftfahrzeugs die Ermittlung der Fahrzeugverzögerung z-Ist fortlaufend um den Fahrbahnneigungseinfluss aktualisiert, indem eine Änderung der Fahrbahnneigung während der Bremsung ermittelt und bei der Ermittlung der Fahrzeugverzögerung z-Ist berücksichtigt wird.
Im Drucksteuermodus 24 wird die Fahrerbremsanforderung 19 beziehungsweise der die Fahrerbremsanforderung 19 repräsentierende Größenwert P-Soll, hier ein Bremssolldruck, eingelesen und im Umrechnungsschritt 33 mit dem bereitgehaltenen Bremsleistungsindex 34 unter Berücksichtigung der Umrechnungsvorschrift 37 verknüpft. Dabei wird sinngemäß in entgegengesetzter Richtung wie bei der Ermittlung des Bremsleistungsindex 34 im Normalbremsmodus 18 vorgegangen. Der die Fahrerbremsanforderung 19 repräsentierende Größenwert wird mit dem vorher adaptierten und die Fahrzeugverzögerungswirkung repräsentierenden Bremsleistungsindex 34 derart verknüpft, beispielsweise multipliziert, dass das Ergebnis ein Fahrersollverzögerungswert z-int in der gleichen Dimension wie der externe Sollverzögerungswert z-ext ist. Die Verknüpfung unter Berücksichtigung des Bremsleistungsindex 34 ist in dem Schaubild gemäß Fig. 2 durch das Verknüpfungsglied 32 verdeutlicht.

Nach Verknüpfung des Fahrersollverzögerungswerts z-int mit dem externen Sollverzögerungswert z-ext durch das Verknüpfungsglied 32 zu einem resultierenden Sollverzögerungswert z-RES wird aus einem Vergleich des resultierenden Sollverzögerungswerts z-RES mit dem Ist-Verzögerungswert z-Ist ein Rückschluss auf den einzustellenden Bremsdruck P gezogen. Dabei wird vorteilhaft die Ist-Verzögerung mit einem Regelkreis 41 geregelt und dabei die Ist-Verzögerung z-Ist der resultierenden Sollverzögerung z-RES nachgeführt. Hierzu umfasst die Steuereinheit 21 einen Regelkreis 41, wobei in dem Regelkreis 41 der Ist-Verzögerungswert z-Ist die Regelgröße, der resultierende Sollverzögerungswert z-RES die Führungsgröße und der Bremsdruck P die Stellgröße bildet. Der Ist-Verzögerungswert z-Ist wird mit dem resultierenden Sollverzögerungswert z-RES als Führungsgröße geregelt, da durch die Stellmaßnahmen durch Variation des Bremsdrucks die Ist-Verzögerung unmittelbar auf sich selbst zurückwirkt. Der Ist-Verzögerungswert z-Ist wird dabei mit dem resultierenden Soll-Verzögerungswert z-RES einem SollWert/Ist-Wert-Vergleich 42 im Regelkreis 41 unterzogen und das Resultat des Soll-Wert/Ist-Wert-Vergleichs 42 einem Regler 38 vorgegeben, welcher anhand des Ergebnisses des Soll-Wert/Ist-Wert-Vergleichs 42 eine entsprechende Einstellung des Bremsdrucks P vornimmt.

### Bezugszeichenliste (Bestandteil der Beschreibung)

- 1.: Bremsanlage
- 2.: Kraftfahrzeug
- 3.: Vorderachse
- 4.: Hinterachse
- 5.: Rad
- 6.: Radbremse
- 7.: Bremszylinder
- 8.: Federspeicher
- 9.: Bremspedal
- 10.: Betriebsbremsventil
- 11.: Bremsleitung
- 12.: Druckmittelvorrat
- 13.: erster Bremskreis
- 14.: zweiter Bremskreis
- 15.: zweiter Druckmittelvorrat
- 16.: Relaisventil
- 17.: Relaisventil
- 18.: Normalbremsmodus
- 19.: Fahrerbremsanforderung
- 20.: Drucksteuerventil
- 21.: Steuereinheit
- 22.: Einlassventil
- 23.: Auslassventil
- 24.: Drucksteuermodus
- 25.: 3/2-Wege-Ventil
- 26.: Druckleitung
- 27.: dritter Druckmittelvorrat
- 28.: Doppelrückschlagventil
- 29.: Drehzahlsensor
- 30.: externe Bremsanforderung
- 31.: Moduserfassungsschritt
- 32.: Verknüpfungsglied
- 33.: Umrechnungsschritt
- 34.: Bremsleistungsindex
- 35.: Speicher
- 36.: Ermittlungsschritt
- 37.: Umrechnungsvorschritt
- 38.: Regler
- 39.: Indexermittlungsschritt
- 40.: aktueller Wert von 34
- 41.: Regelkreis
- 42.: Soll-Wert/Ist-Wert-Vergleich
- 43.: Bremssignalgeber
- 44.: Bremsleitung
- 45.: Bezugswert
- 46.: Bezugsverzögerungswert
- 47.: Anteil
- 48.: Verhältnisskala
- 49.: Division
- 50.: Verknüpfung
- 51.: Antiblockiersystem
- 52.: dynamische Zustandsgröße
- 53.: Messsignal
- 54.: Längsbeschleunigungssensor
- P: Bremsdruck
- P-: Soll Größenwert
- z-Ist: Ist-Verzögerungswert
- z-int: Fahrersollverzögerungswert
- z-ext: externer Sollverzögerungswert
- Z-RES: resultierender Sollverzögerungswert

## Patentansprüche

1. Verfahren zum Einstellen von Bremsdrücken (P) an pneumatisch betätigten Radbremsen (6) eines Kraftfahrzeugs (2), wobei der Bremsdruck (P) in einem Normalbremsmodus (18) in Abhängigkeit einer Fahrerbremsanforderung (19) eingestellt wird und eine Steuereinheit (21) in einem Drucksteuermodus (24) während des Empfangs einer von der Fahrerbremsanforderung (19) unabhängigen externen Bremsanforderung (30), welche der Steuereinheit (21) als externer Sollverzögerungswert (z-ext) vorgegeben wird, den Bremsdruck P an den jeweiligen Radbremsen (6) entsprechend einem resultierenden Sollverzögerungswert (z-RES) der Fahrzeugverzögerung einstellt, wobei die Steuereinheit (21) den resultierenden Sollverzögerungswert (z-RES) unter Verknüpfung des externen Sollverzögerungswerts (z-ext) gemäß der externen Bremsanforderung (30) und einem der Fahrerbremsanforderung (19) entsprechenden Größenwert (P-Soll) ermittelt,
**dadurch gekennzeichnet, dass**
im Normalbremsmodus (18) unter Berücksichtigung des Größenwerts (P-Soll) der Fahrerbremsanforderung (19) wenigstens einer Bremsung und eines gemessenen oder ermittelten Ist-Verzögerungswerts (z-Ist) der Fahrzeugverzögerung ein Bremsleistungsindex (34), welcher quantitativ die Bremswirkung der Radbremsen repräsentiert, ermittelt und für eine Berücksichtigung im Drucksteuermodus (24) bereitgehalten wird, wobei im Drucksteuermodus (24) der bereitgehaltene Bremsleistungsindex (34) mit dem Größenwert (P-Soll) der Fahrerbremsanforderung (19) verknüpft wird.

2. Verfahren nach Anspruch 1,
**dadurch gekennzeichnet, dass**
der Bremsleistungsindex (34) ermittelt wird, indem bei einer Bremsung des Kraftfahrzeugs (2) durch den Fahrer nach einer vorgegebenen Umrechnungsvorschrift (37) ein der Fahrerbremsanforderung (19) entsprechender Fahrersollverzögerungswert (z-int) einer Fahrzeugverzögerung bestimmt und mit dem Ist-Verzögerungswerts (z-Ist) der Fahrzeugverzögerung in Beziehung gesetzt wird.

3. Verfahren nach Anspruch 2,
**dadurch gekennzeichnet, dass**
der Bremsleistungsindex (34) als Quotient des Fahrersollverzögerungswerts (z-int) und des Ist-Verzögerungswerts (z-Ist) angenommen wird.

4. Verfahren nach Anspruch 2 oder 3,
**dadurch gekennzeichnet, dass**
die Umrechnungsvorschrift (37) einen im Voraus bestimmten Bezugswert (45) der Fahrerbremsanforderung (19) und einen damit verknüpften Bezugsverzögerungswert (46) umfasst und als Fahrersollverzögerungswert (z-int) ein Anteil (47) an dem Bezugsverzögerungswert (46) ermittelt wird, welcher nach der Umrechnungsvorschrift (37) dem entsprechenden Anteil (47) der Fahrerbremsanforderung (19) an dem Bezugswert (45) der Fahrerbremsanforderung (19) zugeordnet ist.

5. Verfahren nach Anspruch 4,
**dadurch gekennzeichnet, dass**
mit der Umrechnungsvorschrift (37) jedem Größenwert (P-Soll) der Fahrerbremsanforderung (19) ein bestimmter Anteil (47) an dem Bezugswert (45) der Fahrerbremsanforderung (19) zugeordnet wird und mit verhältnismäßig entsprechenden Anteilen (47) der Bezugsverzögerung (46) verknüpft wird.

6. Verfahren nach einem der Ansprüche 2 bis 5,
**dadurch gekennzeichnet, dass**
im Drucksteuermodus (24) ein der Fahrerbremsanforderung (19) entsprechender Fahrersollverzögerungswert (z-int) ermittelt und mit dem Bremsleistungsindex (34) verknüpft wird.

7. Verfahren nach Anspruch 6,
**dadurch gekennzeichnet, dass**
der Fahrersollverzögerungswert (z-int) im Drucksteuermodus (24) aus einem die Fahrerbremsanforderung (19) repräsentierenden Größenwert (P-Soll) unter Einbeziehung der vorgegebenen Umrechnungsvorschrift (37) ermittelt wird.

8. Verfahren nach einem der vorhergehenden Ansprüche,
**dadurch gekennzeichnet, dass**
bei weiteren Bremsungen des Kraftfahrzeugs (2) durch den Fahrer im Normalbremsmodus (18) jeweils aktuelle Werte (40) des Bremsleistungsindex (34) ermittelt werden und der für den Drucksteuermodus (24) bereitgehaltene Bremsleistungsindex (34) unter Berücksichtigung des aktuellen Werts (40) des Bremsleistungsindex (34) adaptiert wird.

9. Verfahren nach einem der vorhergehenden Ansprüche,
**dadurch gekennzeichnet, dass**
der Ist-Verzögerungswert (z-Ist) mit dem resultierenden Sollverzögerungswert (z-RES) als Führungsgröße gesteuert oder geregelt wird.

10. Verfahren nach einem der vorhergehenden Ansprüche,
**dadurch gekennzeichnet, dass**
die Steuereinheit (21) dynamische Zustandsgrößen (52) der zu bremsenden Räder (5) auswertet und daraus den Ist-Verzögerungswert (z-Ist) ermittelt.

11. Verfahren nach Anspruch 10,
**dadurch gekennzeichnet, dass**
der Ist-Verzögerungswert (z-Ist) auf der Grundlage dynamischer Zustandsgrößen (52) und dem Messsignal (53) eines Längsbeschleunigungssensors (54) ermittelt wird.

12. Verfahren nach einem der vorhergehenden Ansprüche,
**dadurch gekennzeichnet, dass**
die Steuereinheit (21) den Bremsdruck (P) an den Radbremsen (6) jeweils über ein Drucksteuerventil (20) steuert und Bremskreise (13, 14) der Drucksteuerventile (20) über Ansteuerung jeweils eines Aktivierungsventils (25) pro Bremskreis (13, 14) mit einem Druckmittelvorrat (12, 15) verbindet.

13. Bremsanlage eines Kraftfahrzeugs (2) zur Durchführung des Verfahrens nach einem der Ansprüche 1 bis 11, mit pro Rad (5) einem Bremszylinder (7) und einem Drucksteuerventil (20), welche von einer Steuereinheit (21) steuerbar sind, sowie einem vom Fahrer des Kraftfahrzeugs (2) betätigbaren Betriebsbremsventil (10) und einem Bremssignalgeber (43), wobei die Bremsdrücke (P) in den Bremszylindern (7) in einem Normalbremsmodus (18) in Abhängigkeit einer Betätigung des Betriebsbremsventils (10) durch den Fahrer, und in einem Drucksteuermodus (24) über das jeweilige Drucksteuerventil (20) von der Steuereinheit (21) einstellbar sind, wobei die Steuereinheit (21) zum Empfang externer Sollverzögerungswerte (z-ext) einer von der Fahrerbremsanforderung (19) unabhängigen externen Bremsanforderung (30) sowie zur Umschaltung in den für diesen Fall vorgesehenen Drucksteuermodus (24) ausgebildet ist, wobei die Steuereinheit (21) Mittel zur Erfassung eines der Fahrerbremsanforderung (19) entsprechenden Größenwerts (P-Soll) und zur Verknüpfung des externen Sollverzögerungswerts (z-ext) gemäß der externen Bremsanforderung (30) und dem der Fahrerbremsanforderung (19) entsprechenden Größenwert (P-Soll) aufweist,
**dadurch gekennzeichnet, dass**
die Steuereinheit (21) Mittel zur Erfassung eines Ist-Verzögerungswerts (z-Ist) der aktuellen Fahrzeugverzögerung aufweist und derartig eingerichtet ist, dass im Normalbremsmodus (18) ein Bremsleistungsindex (34), welcher quantitativ die Bremswirkung der Radbremsen (6) repräsentiert, unter Berücksichtigung des Ist-Verzögerungswerts (z-Ist) und dem Größenwert (P-Soll) der Fahrerbremsanforderung (19) wenigstens einer Bremsung des Fahrzeugs durch den Fahrer ermittelbar ist und für die Berücksichtigung im Drucksteuermodus (24) bereitgehalten wird, wobei im Drucksteuermodus (24) der bereitgehaltene Bremsleistungsindex (34) mit dem Größenwert (P-soll) der Fahrerbremsanforderung (19) verknüpft wird.

14. Bremsanlage nach Anspruch 13,
**gekennzeichnet durch**
einen Regelkreis (41) zur Einstellung des Ist-Verzögerungswerts (z-Ist), wobei im Regelkreis (41) der Ist-Verzögerungswert (z-Ist) die Regelgröße, der resultierende Sollverzögerungswert (z-RES) die Führungsgröße und der Bremsdruck (P) die Stellgröße bildet, so dass der Ist-Verzögerungswert (z-Ist) an den resultierenden Soll-Verzögerungswert (z-RES) angleichbar ist.

15. Bremsanlage nach Anspruch 13 oder 14,
**gekennzeichnet durch**
ein Antiblockiersystem (51), wobei die Steuereinheit (21) dynamische Zustandsgrößen (52) der zu bremsenden Räder (5) auswertet und bei Vorliegen einer Blockierneigung den Bremsdruck (P) bestimmter Radbremsen (6) im Drucksteuermodus (24) steuert.

16. Bremsanlage nach einem der Ansprüche 13 bis 15,
**dadurch gekennzeichnet, dass**
die Drucksteuerventile (20) in einem oder mehreren Bremskreisen (13, 14) angeordnet sind, welche über jeweils ein Aktivierungsventil (25) mit einem Druckmittelvorrat (12, 15) verbindbar sind, wobei jedes Aktivierungsventil (25) elektrisch an die Steuereinheit (21) angeschlossen und durch die Steuereinheit (21) schaltbar ist, wobei die Drucksteuerventile (20) der Räder (5) einer Achse (3, 4) des Kraftfahrzeugs (2) über einen gemeinsamen Bremskreis (13, 14) mit einem Aktivierungsventil (25) mit einem Druckmittelvorrat (12, 15) verbunden sind.

17. Kraftfahrzeug mit einer Bremsanlage nach einem der Ansprüche 13 bis 16 zur Durchführung eines Verfahrens nach einem der Ansprüche 1 bis 12.

## Claims

1. Method for adjusting brake pressures (P) on pneumatically operated wheel brakes (6) of a motor vehicle (2), wherein in a normal braking mode (18) the brake pressure (P) is adjusted depending on a driver brake request (19), and in a pressure control mode (24) during reception of an external brake request (30) independent of the driver brake request (19) which is imposed on the control unit (21) as an external target deceleration value (z-ext), a control unit (21) adjusts the brake pressure (P) at the respective wheel brakes (6) according to a resulting target deceleration value (z-RES) of the vehicle deceleration, wherein the control unit (21) determines the resulting target deceleration value (z-RES) by linking the external target deceleration value (z-ext) according to the external brake request (30) and a value (P-Soll) corresponding to the driver brake request (19),
**characterized in that**
in normal braking mode (18), taking into account the value (P-Soll) of the driver brake request (19) of at least one braking and a measured or determined actual deceleration value (z-Ist) of the vehicle deceleration, a braking power index (34) is determined which quantitatively represents the braking effect of the wheel brakes (6), and is provided to be taken into account in the pressure control mode (24), wherein in the pressure control mode (24) the provided braking power index (34) is combined with the value (P-Soll) of the driver brake request (19).

2. Method according to Claim 1,
**characterized in that**
the braking power index (34) is determined **in that** on a braking of the motor vehicle (2) by the driver, following a predefined conversion specification (37), a driver target deceleration value (z-int) of a vehicle deceleration corresponding to the driver brake request (19) is determined and set in relation to the actual deceleration value (z-Ist) of the vehicle deceleration.

3. Method according to Claim 2,
**characterized in that**
the braking power index (34) is taken as a quotient of the driver target deceleration value (z-int) and of the actual deceleration value (z-Ist).

4. Method according to Claim 2 or 3,
**characterized in that**
the conversion specification (37) comprises a predetermined reference value (45) of the driver brake request (19) and a reference deceleration value (46) linked thereto, and a proportion (47) of the reference deceleration value (46) is determined as the driver target deceleration value (z-int), and following the conversion specification (37), is assigned to the corresponding proportion (46) of the driver brake request (19) at the reference value (45) of the driver brake request (19).

5. Method according to Claim 4,
**characterized in that**
by means of the conversion specification (37), a specific proportion (47) of the reference value (45) of the driver brake request (19) is assigned to each value (P-Soll) of the driver brake request (19) and linked to proportionally corresponding amounts (47) of the reference deceleration (46).

6. Method according to any of Claims 2 to 5,
**characterized in that**
in pressure control mode (24), a driver target deceleration value (z-int) corresponding to the driver brake request (19) is determined and linked to the braking power index (34).

7. Method according to Claim 6,
**characterized in that**
in the pressure control mode (24), the driver target deceleration value (z-int) is determined from a value (P-Soll) representing the driver brake request (19) by means of the predefined conversion specification (37) .

8. Method according to any of the preceding claims,
**characterized in that**
on further brakings of the motor vehicle (2) by the driver in normal braking mode (18), in each case current values (40) of the braking power index (34) are determined, and the braking power index (34) provided for the pressure control mode (24) is adapted taking into account the current value (40) of the braking power index (34).

9. Method according to any of the preceding claims,
**characterized in that**
the actual deceleration value (z-Ist) is controlled or regulated with the resulting target deceleration value (z-RES) as a command variable.

10. Method according to any of the preceding claims,
**characterized in that**
the control unit (21) evaluates dynamic state variables (52) of the wheels (5) to be braked and from these determines the actual deceleration value (z-Ist).

11. Method according to Claim 10,
**characterized in that**
the actual deceleration value (z-Ist) is determined on the basis of dynamic state variables (52) and the measurement signal (53) of a longitudinal acceleration sensor (54).

12. Method according to any of the claims,
**characterized in that**
the control unit (21) controls the brake pressure (P) at the wheel brakes (6) via a respective pressure control valve (20), and connects brake circuits (13, 14) of the pressure control valves (20) to a pressure medium store (12, 15) via respective operation of an actuation valve (25) per brake circuit (13, 14).

13. Brake system of a motor vehicle (2) for performance of the method according to any of Claims 1 to 11, with, for each wheel (5), a brake cylinder (7) and a pressure control valve (20) which can be controlled by a control unit (21), and with a service brake valve (10) which can be actuated by the driver of the motor vehicle (2), and with a brake signal emitter (43), wherein the brake pressures (P) in the brake cylinders (7) in a normal braking mode (18) can be set depending on actuation of the brake service valve (10) by the driver, and in a pressure control mode (24) by the control unit (21) via the respective pressure control valve (20), wherein the control unit (21) is configured to receive external target deceleration values (z-ext) of an external brake request (30) which is independent of the driver brake request (19), and to switch into the pressure control mode (24) provided for this case, wherein the control unit (21) has means for detecting a value (P-Soll) corresponding to a driver brake request (19) and for linking the external target deceleration value (z-ext) according to the external brake request (30) and the value (P-Soll) corresponding to the driver brake request (19),
**characterized in that**
the control unit (21) has means for detecting an actual deceleration value (z-Ist) of the current vehicle deceleration, and is configured such that in normal brake mode (18), a braking power index (34) which quantitatively represents a braking effect of the wheel brakes (6) can be determined taking into account the actual deceleration value (z-Ist) and the value (P-Soll) of the driver brake request (19) of at least one braking of the vehicle by the driver, and is provided for being taken into account in the pressure control mode (24), wherein in pressure control mode (24), the provided braking power index (34) is combined with the value (P-Soll) of the driver brake request (19).

14. Brake system according to Claim 13,
**characterized by**
a feedback control circuit (41) for setting the actual deceleration value (z-Ist), wherein in the feedback control circuit (41), the actual deceleration value (z-Ist) is the controlled variable, the resulting target deceleration value (z-RES) is the command variable, and the brake pressure (P) is the correcting variable, so that the actual deceleration value (z-Ist) can be made to follow the resulting target deceleration value (z-RES).

15. Brake system according to Claim 13 or 14,
**characterized by**
an anti-lock braking system (51), wherein the control unit (21) evaluates dynamic state variables (52) of the wheels (5) to be braked and on the presence of a blocking tendency, controls the brake pressure (P) of certain wheel brakes (6) in the pressure control mode (24) .

16. Brake system according to any of Claims 13 to 15,
**characterized in that**
the pressure control valves (20) are arranged in one or more brake circuits (13, 14) which can be connected via a respective actuation valve (25) to a pressure medium store (12, 15), wherein each actuation valve (25) is electrically connected to the control unit (21) and is switchable by the control unit (21), wherein the pressure control valves (20) of the wheels (5) of one axle (3, 4) of the motor vehicle (2) are connected via a common brake circuit (13, 14) with an actuation valve (25) to a pressure medium store (12, 15).

17. Motor vehicle with a brake system according to any of Claims 13 to 16 for performing a method according to any of Claims 1 to 12.

## Revendications

1. Procédé de réglage de pressions de freinage (P) à des freins de roue (6) à commande pneumatique d'un véhicule automobile (2), dans lequel procédé on règle la pression de freinage (P) dans un mode de freinage normal (18) en fonction d'une demande de freinage du conducteur (19) et une unité de commande (21) règle, dans un mode de commande de pression (24) pendant la réception d'une demande de freinage externe (30) indépendante de la demande de freinage du conducteur (19), qui est imposée à l'unité de commande (21) sous forme de valeur de décélération de consigne externe (z-ext), la pression de freinage (P) aux freins de roue respectifs (6) selon une valeur de décélération de consigne résultante (z-RES) de la décélération du véhicule, dans lequel l'unité de commande (21) détermine la valeur de décélération de consigne résultante (z-RES) en liant la valeur de décélération de consigne externe (z-ext) selon la demande de freinage externe (30) et une valeur (P-Soll) correspondante à la demande de freinage du conducteur (19),
**caractérisé en ce que** dans le mode de freinage normal (18) en tenant compte de la valeur (P-Soll) de la demande de freinage du conducteur (19) d'au moins un freinage et d'une valeur de décélération réelle mesurée ou déterminée (z-Ist) de la décélération du véhicule, on détermine un indice de puissance de freinage (34), qui représente quantitativement l'effet de freinage des freins de roue, et on le conserve pour en tenir compte dans le mode de commande de pression (24), dans lequel dans le mode de commande de pression (24) on lie l'indice de puissance de freinage conservé (34) à la valeur (P-Soll) de la demande de freinage du conducteur (19) .

2. Procédé selon la revendication 1, **caractérisé en ce que** l'on détermine l'indice de puissance de freinage (34) par le fait que lors d'un freinage du véhicule automobile (2) par le conducteur on détermine par une prescription de conversion prédéterminée (37) une valeur de décélération de consigne du conducteur (z-int) d'une décélération du véhicule correspondant à une demande de freinage du conducteur (19) et on la met en relation avec la valeur de décélération réelle (z-Ist) de la décélération du véhicule.

3. Procédé selon la revendication 2, **caractérisé en ce que** l'on prend comme indice de puissance de freinage (34) le quotient de la valeur de décélération de consigne du conducteur (z-int) et de la valeur de décélération réelle (z-Ist).

4. Procédé selon la revendication 2 ou 3, **caractérisé en ce que** la prescription de conversion (37) comprend une valeur de référence (45) de la demande de freinage du conducteur (19) déterminée au préalable et une valeur de décélération de référence (46) liée à celle-ci, et on détermine comme valeur de décélération de consigne du conducteur (z-int) une part (47) de la valeur de décélération de référence (46), qui selon la prescription de conversion (37) est attribuée à la part correspondante (47) de la demande de freinage du conducteur (19) dans la valeur de référence (45) de la demande de freinage du conducteur (19).

5. Procédé selon la revendication 4, **caractérisé en ce qu'**avec la prescription de conversion (37) on attribue à chaque valeur (P-Soll) de la demande de freinage du conducteur (19) une part déterminée (47) de la valeur de référence (45) de la demande de freinage du conducteur (19) et on la lie à une part relativement correspondante (47) de la demande de décélération de référence (46).

6. Procédé selon l'une quelconque des revendications 2 à 5, **caractérisé en ce que** dans le mode de commande de pression (34) on détermine une valeur de décélération de consigne du conducteur (z-int) correspondant à la demande de freinage du conducteur (19) et on la lie à l'indice de puissance de freinage (34) .

7. Procédé selon la revendication 6, **caractérisé en ce que** l'on détermine la valeur de décélération de consigne du conducteur (z-int) dans le mode de commande de pression (24) à partir d'une valeur (P-Soll) représentant la demande de freinage du conducteur (19) en tenant compte de la prescription de conversion prédéterminée (37).

8. Procédé selon l'une quelconque des revendications précédentes, **caractérisé en ce que** lors d'autres freinages du véhicule automobile (2) par le conducteur dans le mode de freinage normal (18) on détermine chaque fois des valeurs actuelles (40) de l'indice de puissance de freinage (34) et on adapte l'indice de puissance de freinage (34) conservé pour le mode de commande de pression (24) en tenant compte de la valeur actuelle (40) de l'indice de puissance de freinage (34) .

9. Procédé selon l'une quelconque des revendications précédentes, **caractérisé en ce que** l'on commande ou on régule la valeur de décélération réelle (z-Ist) avec la valeur de décélération de consigne résultante (z-RES) comme quantité de guidage.

10. Procédé selon l'une quelconque des revendications précédentes, **caractérisé en ce que** l'unité de commande (21) évalue des valeurs d'état dynamique (52) des roues à freiner (5) et détermine à partir de celles-ci la valeur de décélération réelle (z-Ist).

11. Procédé selon la revendication 10, **caractérisé en ce que** l'on détermine la valeur de décélération réelle (z-Ist) sur la base de valeurs d'état dynamique (52) et du signal de mesure (53) d'un détecteur d'accélération longitudinale (54).

12. Procédé selon l'une quelconque des revendications précédentes, **caractérisé en ce que** l'unité de commande (21) commande la pression de freinage (P) aux freins de roue (6) respectivement par une soupape de commande de pression (20) et relie des circuits de freinage (13, 14) des soupapes de commande de pression (20) au réservoir de milieu sous pression (12, 15) par la commande chaque fois d'une soupape d'activation (25) par circuit de freinage (13, 14))

13. Système de freinage d'un véhicule automobile (2) pour la mise en œuvre du procédé selon l'une quelconque des revendications 1 à 11, avec par roue (5) un cylindre de frein (7) et une soupape de commande de pression (20), qui peuvent être commandés par une unité de commande (21), ainsi qu'avec une soupape de réglage de service (10) pouvant être actionnée par le conducteur du véhicule automobile (2) et un émetteur de signal de freinage (43), dans lequel les pressions de freinage (P) dans les cylindres de frein (7) peuvent être réglées dans un mode de freinage normal (18) en fonction d'un actionnement de la soupape de freinage de service (10) par le conducteur, et dans un mode de commande de pression (24) par l'unité de commande (21) par l'intermédiaire de la soupape de commande de pression (20), dans lequel l'unité de commande (21) est conçue pour la réception de valeurs de décélération de consigne externes (z-ext) d'une demande de freinage externe (30) indépendante de la demande de freinage du conducteur (19), dans lequel l'unité de commande (21) présente des moyens pour la détection d'une valeur de grandeur (P-Soll) correspondant à la demande de freinage du conducteur (19) et pour la liaison de la valeur de décélération de consigne externe (z-ext) selon la demande de freinage externe (30) à la valeur (P-Soll) correspondant à la demande de freinage du conducteur (19),
**caractérisé en ce que** l'unité de commande (21) présente des moyens pour la détection d'une valeur de décélération réelle (z-Ist) de la décélération actuelle du véhicule et est configurée de telle manière que dans le mode de freinage normal (18) un indice de puissance de freinage (34), qui représente quantitativement l'effet du freinage des freins de roue (6), puisse être déterminé en tenant compte de la valeur de décélération réelle (z-Ist) et de la valeur (P-Soll) de la demande de freinage du conducteur (19) d'au moins un freinage du véhicule par le conducteur et qu'il soit conservé pour être pris en considération dans le mode de commande de pression (24), dans lequel dans le mode de commande de pression (24) on lie l'indice de puissance de freinage conservé (34) à la valeur (P-Soll) de la demande de freinage du conducteur (19).

14. Système de freinage selon la revendication 13, **caractérisé par** un circuit de régulation (41) pour le réglage de la valeur de décélération réelle (z-Ist), dans lequel dans le circuit de régulation (41) la valeur de décélération réelle (z-Ist) forme la quantité de régulation, la valeur de décélération de consigne résultante (z-RES) forme la quantité de guidage et la pression de freinage (P) forme la quantité de réglage, de telle manière que la valeur de décélération réelle (z-Ist) puisse être assimilée à la valeur de décélération de consigne résultante (z-RES).

15. Système de freinage selon une revendication 13 ou 14, **caractérisé par** un système antiblocage (51), dans lequel l'unité de commande (21) évalue des valeurs d'état dynamique (52) des roues à freiner (5) et en présence d'une tendance au blocage commande la pression de freinage (P) de certains freins de roue (6) dans le mode de commande de pression (24).

16. Système de freinage selon l'une quelconque des revendications 13 à 15, **caractérisé en ce que** les soupapes de commande de pression (20) sont disposées dans un ou plusieurs circuit (s) de freinage (13, 14), qui peuvent être utilisés avec le réservoir de milieu sous pression (12, 15) par l'intermédiaire chaque fois d'une soupape d'activation (25), dans lequel chaque soupape d'activation (25) est électriquement reliée à l'unité de commande (21) et peut de ce fait être commutée par l'unité de commande (21), dans lequel les soupapes de commande de pression (20) des roues (5) d'un essieu (3, 4) du véhicule automobile (2) sont raccordées à un réservoir de milieu sous pression (12, 15) par l'intermédiaire d'un circuit de freinage commun (13, 14) avec une soupape d'activation (25).

17. Véhicule automobile doté d'un système de freinage selon l'une quelconque des revendications 13 à 16 pour la mise en œuvre d'un procédé selon l'une quelconque des revendications 1 à 12.
